Europäisches Patentamt

European Patent Office

Office européen des brevets

(11) Veröffentlichungsnummer: **0 003 287**
**B1**

(12) ## EUROPÄISCHE PATENTSCHRIFT

(21) Anmeldenummer: **79100064.9**

(22) Anmeldetag: **10.01.79**

(51) Int. Cl.³: **B 60 L  5/18, B 60 L  5/40,**
**E 21 F  9/00**

(54) Stromabnehmer für schlagwettergefährdete Betriebe, insbesondere für Grubenlokomotiven, und seine Verwendung

(30) Priorität: **23.01.78 DE 2802726**

(43) Veröffentlichungstag der Anmeldung:
**08.08.79 Patentblatt 79/16**

(45) Bekanntmachung des Hinweises auf die Patenterteilung:
**04.03.81 Patentblatt 81/9**

(84) Benannte Vertragsstaaten:
**BE FR GB**

(58) Entgegenhaltungen:
DE - A - 1 515 340
DE - A - 1 925 493
DE - A - 2 144 049
DE - B - 1 028 065
DE - C - 927 027
DE - C - 930 510
US - A - 2 369 837

(73) Patentinhaber: **SIEMENS AKTIENGESELLSCHAFT**
**Berlin und München**
**Postfach 22 02 61**
**D-8000 München 22 (DE)**

(72) Erfinder: **Hoppelshäuser, Franz**
**Neisseweg 6**
**D-8520 Erlangen (DE)**

Courier Press, Leamington Spa, England.

Stromabnehmer für schlagwettergefährdete Betriebe, insbesondere für Grubenlokomotiven

Die Erfindung bezieht sich auf einen Stromabnehmer für schlagwettergefährdete Betriebe, insbesondere für Grubenlokomotiven, bei dem in der Nähe der Kontaktstelle zwischen Schleifstück und Fahrdraht Düsen angeordnet sind, durch die ein neutrales Gas gegen das Schleifstück geblasen wird.

Für Fahrdrahtlokomotiven auf schlagwettergefährdeten Strecken ist es durch die DE-B-1 028 065 bekannt (Spalte 1, Absatz 1), in der Nähe des Schleifers Düsen anzubringen und durch diese Düsen Stickgas, z.B. Stickstoff, gegen den Schleifer zu blasen. Hierdurch soll verhindert werden, daß die auftretenden Funken eine Entzündung des Grubengases hererovrufen. Bei dieser Einrichtung ist ein großer Stickstoffverbrauch gegeben.

Um das Mitführen von Gasflaschen zu vermeiden, ist es auch aus der DE-B-1 028 065 schon bekannt (Spalte 1, Absatz 2), die an der Sohle des Stollens vorhandene, meist schlagwetterfreie Luft anzusaugen und gegen den Schleifer zu blasen. Um dabei zu vermeiden, daß brennbare Gase aus dem Sohlenbereich gegen den Schleifbügel geblasen werden, hat man in dem Zug dieser Gasleitungen Brennkammern eingeschaltet, die z.B. mit einer Widerstandsheizung ausgestattet sein können. Diese Anordnung kann aber den gestellten Forderungen nur bedingt gerecht weden, da die Gefahr besteht, daß Schleiferfunken durch das Anblasen mit der angesaugten Luft nicht gelöscht, sondern angefacht oder in die Schlagwetter geblasen werden und diese zünden.

Aufgabe der Erfindung ist es, bei Verwendung eines neutralen Gases den Gasbedarf zur Erzielung einer Schutzgashülle an der Kontaktstelle zwischen Schleifstück und Fahrdraht zu verringern.

Diese Aufgabe wird bei einem Stromabnehmer der eingangs genannten Art dadurch gelöst, daß der Träger für das Schleifstück als Kammer ausgebildet ist, die mit einer Gaszuleitung und vor und hinter dem Schleifstück mit in der Wandung angeordneten Düsen versehen ist.

Auf diese Weise wird mit einem geringen Gasverbrauch eine Schutzgashülle um die Kontaktstelle errichtet, ohne daß die dynamischen Verhältnisse des Stromabnehmers durch Gewichtserhöhung nachteilig beeinflüßt werden.

In der Zeichnung sind Ausführungsbeispiele der Erfindung dargestellt.

Fig. 1 und 2 zeigen in zwei Ansichten einen Schleifstückstromabnehmer,

Fig. 3, 4 und 5 in zwei Ansichten und Draufsicht einen Schleifschuh-Stromabnehmer und

Fig. 6 und 7 in zwei Ansichten einen Stangen-Stromabnehmer für Grubenlokomotiven.

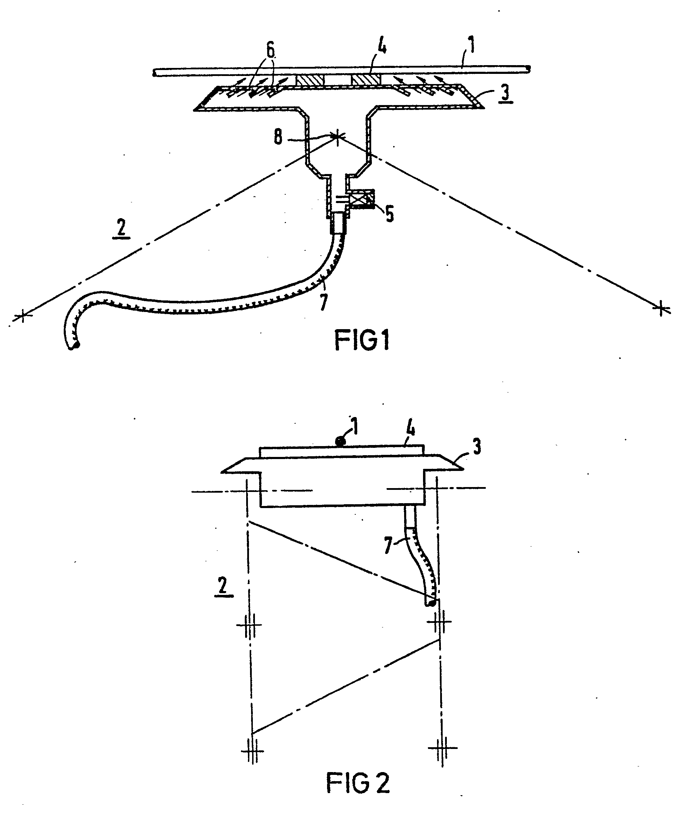

In Fig. 1 und 2 ist mit 1 ein Fahrdraht bezeichnet, an den ein Schleifstückstromabnehmer 2 angelegt ist. Der Schleifstückstromabnehmer trägt in seinem Scheitelgelenk 8 eine Wippe mit zwei an einem Schleifstückträger 3 angeordneten Schleifstücken 4, insbesondere aus Kohle. Der Schleifstückträger 3 überragt die Schleifstücke 4 und ist als Kammer aus Alumniumblech ausgebildet, die vor und hinter dem Schleifstück 4 mit in der Wandung angeordneten Düsen 6 und mit einer Gaszuleitung 7 versehen ist. Hierbei sind die Düsen 6 zweckmäßig durch Stanzen der oberen Kammerwandung gebildet.

In vorteilhafter Weise ist am Eintritt der Gaszuleitung 7 in die Kammer ein elektronischer Strömungswächter 5 angeordnet. Dieser Strömungswächter spricht bei Absinken der Strömungsgeschwindigkeit des Gases unter einen festzulegenden Wert an und gibt ein Signal, welches auf den Steuerstromkreis der Lokomotive wirkt und dadurch den Fahrmotorenstromkreis unterbricht.

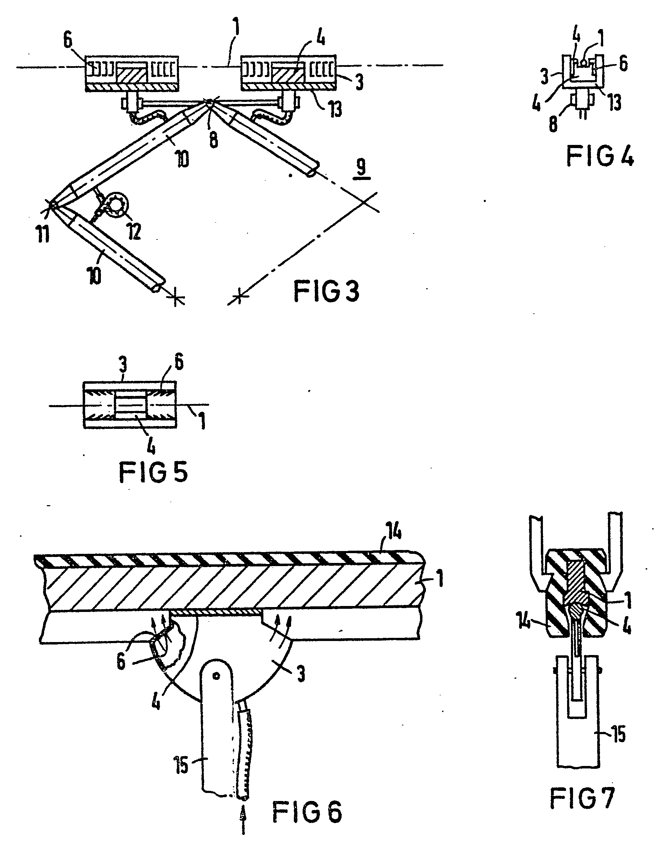

Bei dem in Fig. 3, 4 und 5 dargestellten Schleifschuhstromabnehmer 9 ist das Schutzgas über hohle Holme 10 des Scherengestänges geführt, wobei die Gelenke 11 durch Schlauchverbinder 12 überbrückt sind. Dadurch wird ein Mediumverlust an den Gelenken 11 vermieden. Die Schleifstücke 4 sind in U-förmigen Kammern im Boden 13 angeordnet und die Düsen 6 befinden sich and den Innenseiten der U-förmigen Schenkel.

Ein besonders kleiner Gasverbrauch läßt sich bei Anwendung des erfindungsgemäßen Stromabnehmers bei Fahrleitungen mit Berührungsschutz erzielen. Wie die Fig. 6 und 7 zeigen, ist hierbei der Fahrdraht 1 mit einer isolierenden geschlitzten Hülle 14 versehen. Der an einem Holm 15 angeordnete Schleifstückträger ist als Düsenkammer ausgebildet und hat zum Fahrdraht 1 gerichtete als Schlitze ausgebildete Düsen 6.

**Patentansprüche**

1. Stromabnehmer für schlagwettergefährdete Betriebe, insbesondere für Grubenlokomotiven, bei dem in der Nähe der Kontaktstelle zwischen Schleifstück und Fahrdraht Düsen angeordnet sind, durch die ein neutrales Gas gegen das Schleifstück geblasen wird, dadurch gekennzeichnet, daß der Träger (3) für das Schleifstück (4) als Kammer ausgebildet ist, die mit einer Gaszuleitung (7) und vor und hinter dem Schleifstück (4) mit in der Wandung angeordneten Düsen (6) versehen ist.

2. Stromabnehmer nach Anspruch 1, dadurch gekennzeichnet, daß am Eintritt der Gaszuleitung (7) in den als Kammer ausgebildeten Schleifstückträger (3) ein elektronischer Strömungswächter (5) angeordnet ist.

3. Stromabnehmer nach Anspruch 1, dadurch gekennzeichnet, daß die Kammer U-förmig ausbegildet ist, das Schleifstück (4) im Boden (13) des U-förmigen Teiles angeordnet ist und die Düsen (6) an den Innenseiten der U-Schenkel angeordnet sind.

4. Stromabnehmer nach Anspruch 1, gekennzeichnet durch die Verwendung bei Holmen- bzw. Stangenstromabnehmern für Fahrleitungen mit Berührungsschutz.

**Revendications**

1. Elément de prise de courant pour des exploitations grisouteuses, plus particulièrement pour des locotracteurs de fond, dans lequel on prévoit dans le voisinage de l'emplacement de contact entre le frotteur et le fil aérien, des tuyères à travers lesquelles un gaz neutre est soufflé contre le frotteur, caractérisé par le fait que le support (3) pour le frotteur (4) est réalisé sous la forme d'une chambre qui est pourvue d'une conduite d'alimentation en gaz (7) et de tuyères (6) ménagées dans la paroi, en avant et en arrière du frotteur (4).

2. Elément de prise de courant selon la revendication 1, caractérisé par le fait qu'à l'entrée de la conduite d'alimentation en gaz (7) dans le support (3) de frotteur réalisé sous la forme d'une chambre, est prévu un dispositif de contrôle électronique (5) de l'écoulement.

3. Elément de prise de courant selon la revendication 1, caractérisé par le fait que la chambre a la forme d'un U, le frotteur (4) est disposé dans le fond (13) de la partie en U, et les tuyères (6) sont disposées dans l'espace intérieur des branches du U.

4. Elément de prise de courant selon la revendication 1, caractérisé par sa mise en oeuvre dans des éléments de prise de courant en forme de longerons ou de bâtons de contact pour des fils aériens à protection de contact.

**Claims**

1. Current collector for systems subject to explosive atmospheres, particularly for mine locomotives, wherein in the vicinity of the point of contact between the contact shoe and the contact wire there are arranged nozzles through which a neutral gas is blown against the contact shoe, characterized in that the carrier (3) for the contact shoe (4) is constructed as a chamber which is provided with a gas supply line (8) and with nozzles (6) which are arranged in the wall in front of and behind the contact shoe (4).

2. Current collector as claimed in claim 1, characterised in that at the inlet of the gas supply line (7) into the contact shoe carrier (3) there is arranged an electronic flow monitor (5).

3. Current collector as claimed in claim 1, characterised in that the chamber is constructed so as to be U-shaped, the contact shoe (4) is arranged in the base (13) of the U-shaped part and the nozzles (6) are arranged on the inner sides of the arms of the U.

4. Current collector as claimed in claim 1, characterised by use in beam-type or pole-type current collectors for contact lines of the protected type.

FIG 1

FIG 2

FIG 3

FIG 4

FIG 5

FIG 6

FIG 7